# EUROPÄISCHE PATENTSCHRIFT

(11) **EP 2 352 692 B1**
(45) Veröffentlichungstag und Bekanntmachung des Hinweises auf die Patenterteilung: **06.01.2016**
(21) Anmeldenummer: 09744080.4
(22) Anmeldetag: 28.10.2009
(51) Int. Cl.: B67C 3/24, B65G 47/84, B29C 49/42

(54) **VORRICHTUNG ZUM GREIFEN VON PET-FLASCHEN IN FLASCHENABFÜLLANLAGEN ODER DERGLEICHEN**
DEVICE FOR GRIPPING PET BOTTLES IN BOTTLE-FILLING SYSTEMS OR THE LIKE
DISPOSITIF DE PRÉHENSION DE BOUTEILLES EN PET DANS DES INSTALLATIONS D'EMBOUTEILLAGE OU ANALOGUES

(30) Priorität: 03.11.2008 DE 102008055616
(43) Veröffentlichungstag der Anmeldung: 10.08.2011
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2009/007688
(87) Internationale Veröffentlichungsnummer: WO 2010/060514

(56) Entgegenhaltungen:
- EP-A1- 1 375 395
- WO-A1-03/068643
- DE-A1-102006 012 020
- DE-U1-202005 002 924
- IT-B1- 1 296 413

## Beschreibung

Die Erfindung richtet sich auf eine Vorrichtung zum Greifen von PET-Flaschen in Flaschenabfüllanlagen, insbesondere zur Übergabe von Stern zu Stern/Füller/Rinser, gemäß dem Oberbegriff des Anspruchs 1, und wie aus der WO 03/068643 bekannt.

Derartige Greifer, insbesondere solche, die mit einem angetriebenen Öffnungs- und Schließmechanismus versehen sind, d.h. sogenannte aktive Greifer, sind in sehr unterschiedlichen Gestaltungen bekannt. Um hier lediglich einige Beispiele zu nennen, sei auf die DE 103 25 137 A, die DE 10 2005 014 838 A oder die DE 10 2005 041 929 A verwiesen, wobei letztere über Zahnräder synchronisierte Greifarme zeigt, die mit mit Dauermagneten bestückten Ansätzen versehen sind, um Greifkräfte auszuüben, etwa mit gleichzeitig einander abstoßenden Magneten oder mir einander anziehenden Permanentmagneten, derart, dass die Summe der in Greif-/Schwenkrichtung auf die Greiferarme wirkende Abstoß- und Anziehungskräfte im Wesentlichen konstant ist.

Da z.B. die Transfersterne, an denen derartige Greifer positioniert sind, mit Servomotoren einzeln angetrieben sind, sind diese nicht immer 100 %-ig synchron mit beispielsweise den zugeordneten Maschinen, wie Füller etc. Es kann daher notwendig sein, dass die Greifer horizontal ein gewisses Spiel aufweisen, um diese Asynchronitäten auszugleichen und um Zerstörungen vorzugreifen.

Die Aufgabe der Erfindung besteht somit darin, dass eine geringfügige horizontale Ausweichbewegung der Greifer möglich gemacht wird bei gleichzeitiger Ausübung einer Rückstellkraft in die ursprüngliche ausgefluchtete Position der Greifarme.

Mit einer Vorrichtung der eingangs bezeichneten Art wird diese Aufgabe gemäß der Erfindung dadurch gelöst, dass die Zentriereinrichtung von Magneten am Halteelement einerseits und am Transferstern andererseits gebildet ist. Bei diesen Magneten handelt es sich vorzugsweise um Permanentmagneten, ohne dass die Erfindung hierauf beschränkt wäre.

Ein Vorteil der Erfindung besteht somit bei über Hubkurven gesteuerten aktiven Greifern darin, dass diese Hubkurven bei wechselnden Mündungsdurchmessern nicht geändert oder verstellt werden müssen. Die Schließbewegung ist immer gleich, hat ein derartiger aktiver Greifer eine Flasche mit größerer Mündung bereits vor dem Tangentenpunkt ergriffen, eine Flasche mit kleinerer Mündung erst nach dem Tangentenpunkt. Dadurch ergeben sich auch seitliche Kräfte beispielsweise wegen der starren Flaschenauflage des Füllers, die die Flasche, während sie schon am aktiven Greifer gehalten ist, fixiert.

Bei kleinen Teilkreisen ergeben sich kurvenförmige Eintauchbahnen in der Flasche in den Greifern, die zu Kollisionen mit der Greiferspitze führen können. So kann der Greifer zwar große Mündungen (z.B. 38er) bei Teilkreisen von beispielsweise 360 mm ohne Kollision mit der Greiferspitze verarbeiten, bei noch größeren Mündungen aber benötigt man ein Ausweichen, damit die Greiferspitze nicht beschädigt wird, was durch die vorliegende Erfindung erreicht wird.

Eine zweckmäßige weitere Ausgestaltung besteht nach der Erfindung darin, dass das Halteelement einen mit einem Magneten versehenen Ansatz aufweist zum Überstreichen der im Transferstern positionierten Rückstellmagneten. Dies sorgt für eine sehr einfache kostengünstige Konstruktion, die dabei durch eine weitere Ausgestaltung der Erfindung noch zweckmäßiger wird, die darin besteht, dass die Magnete im Ansatz des Halteelementes und/oder im Transferstern eingegossen sind.

Durch das Eingießen der z.B. Permanentmagneten in die in der Regel aus Kunststoff bestehenden entsprechenden Maschinenelemente wird erreicht, dass die Gesamtvorrichtung leicht gereinigt werden kann, zumal etwa schwer zu reinigende Rückstellfedern hier völlig entbehrlich sind. Auch sind die Magnete korrosionsgeschützt und durch die berührungsfreie Bewegungsmöglichkeit auch verschleißfrei. Dabei kann vorgesehen sein, dass die Magnete als sich abstoßende oder sich anziehende Magnete im jeweiligen Vorrichtungselement ausgebildet sind.

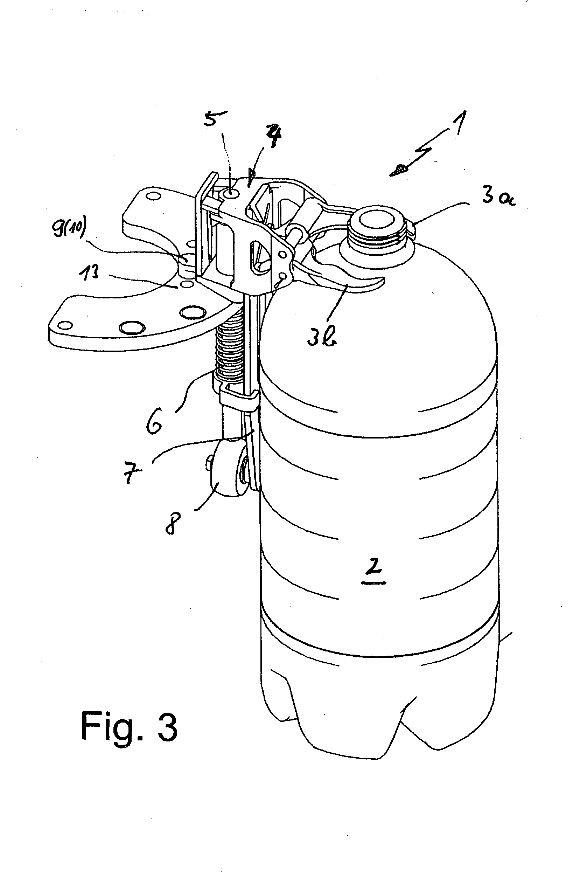

Weitere Einzelheiten, Merkmale und Vorteile der Erfindung ergeben sich aufgrund der nachfolgenden Beschreibung sowie anhand der Zeichnung. Diese zeigt in
Fig. 1 die Seitenansicht auf einen erfindungsgemäßen Aktiv-
   a) greifer mit angedeuteter offener PET-Flasche,
Fig. 2 eine Aufsicht auf einen Greifer ohne zusätzliche
   a) Elemente sowie in
Fig. 3 in räumlicher Darstellung einen Greifer nach der
   a) Erfindung mit leicht geöffneten Greiferarmen.

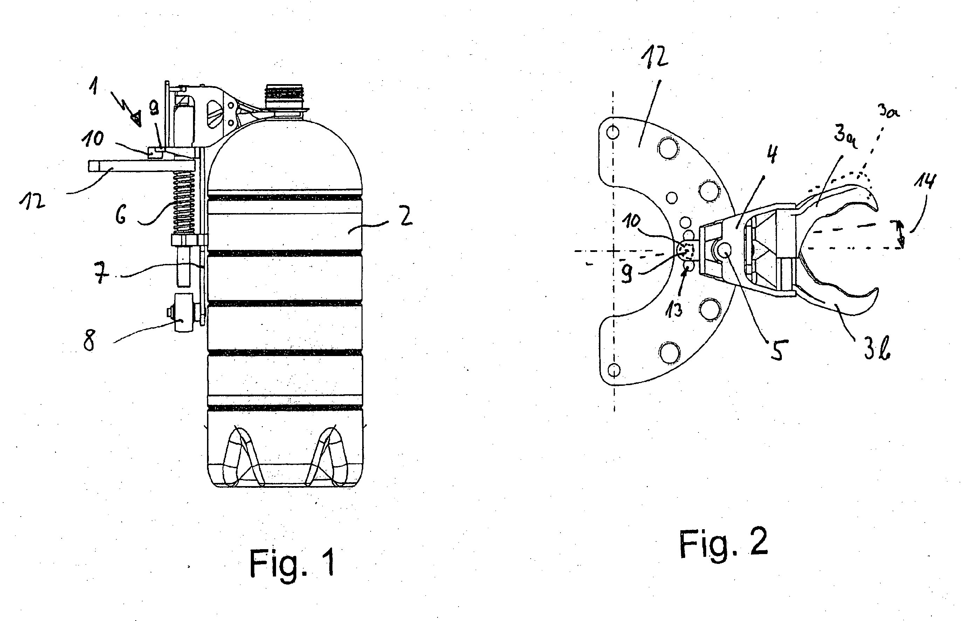

Die in den Figuren allgemein mit 1 bezeichnete Vorrichtung dient zum Greifen von PET-Flaschen 2. Bei dieser Vorrichtung handelt es sich um einen sogenannten aktiven Greifer mit zwei in Öffnungs- und Schließrichtung zwangsgesteuerten Greiferarmen 3a und 3b, die an einem Halteelement 4 positioniert sind, welches in einer Drehachse 5 parallel zur Flaschenachse verschwenkbar ist. Die Öffnungsund Schließbewegung wird mit einer von einer Feder 6 beaufschlagten Steuerplatte 7 ausgeübt, die in Fig. 1 nach oben und unten gegen die Kraft der Feder 6 verschiebbar ist, wobei eine Steuerkurve ein Rollrad 8 an der Steuerplatte 7 beaufschlagt, hierauf kommt es vorliegend nicht näher an.

An dem Halteelement 4 ist auf der bezogen auf die Drehachse 5 gegenüberliegenden Seite relativ zu den Greifarmen 3 ein Ansatz 9 angeformt, in dem ein Dauermagnet 10 eingegossen ist, der auf Abstand einen Haltebogen 12 in dem Bereich überstreicht, in dem Dauermagneten 13 vorgesehen sind, die ebenfalls in den Kunststoff des Haltebogens 12 bzw. Transferstern eingegossen sind.

Die Wirkungsweise ist dabei die folgende: Wird beispielsweise der Halteelement 4 mit den Greifarmen 3a und 3b seitlich ausgelenkt, was in Fig. 2 in eine Richtung gestrichelt angedeutet und mit dem Doppelpfeil 14 bezeichnet ist, so zwingen die Dauermagneten 10 und 13 zusammen das Halteelement 4 nach Abnahme einer seitlichen Ausschwenkkraft in die ursprüngliche Position zurück. Damit können Flaschenhälse sehr unterschiedlicher Durchmesser ergriffen werden.

Natürlich ist das beschriebene Ausführungsbeispiel der Erfindung noch in vielfacher Hinsicht abzuändern, ohne den Grundgedanken zu verlassen, was insbesondere Anzahl und Stärke der Dauermagneten angeht.

## Patentansprüche

1. Vorrichtung (1) zum Greifen von PET-Flaschen (2) in Flaschenabfüllanlagen, insbesondere zur Übergabe von Stern zu Stern/Füller/Rinser, umfassend einen Transfestern (12), an dem zumindest ein Greifer positioniert ist, wobei der zumindest eine Greifer ein Halteelement (4) und zwei am Halteelement (4) positionierte Greifarme (3a, 3b) aufweist, wobei das die Greifarme (3a,3b) aufweisende Halteelement (4) um eine zur zentrischen Flaschenachse parallele Achse (5) drehbar gelagert ist und mit einer Zentriereinrichtung versehen ist, die die Greifarme (3a,3b) nach seitlichen Auslenkbewegungen in die zentrierte Lage zurückzwingt, **dadurch gekennzeichnet, dass** die Zentriereinrichtung von Magneten (10, 13) am Halteelement (4) einerseits und am Transferstern (12) andererseits gebildet ist.

2. Vorrichtung nach Anspruch 1 oder 2, **dadurch gekennzeichnet, dass** das Halteelement (4) einen mit einem Magneten (10) versehenen Ansatz (9) aufweist zum Überstreichen von im Transferstern positionierten Rückstellmagneten.

3. Vorrichtung nach Anspruch 2, **dadurch gekennzeichnet, dass** die Magnete (10, 13) im Ansatz (9) des Halteelementes und/oder im Transferstern eingegossen sind.

4. Vorrichtung nach einem der vorangehenden Ansprüche, **dadurch gekennzeichnet, dass** die Magnete als sich abstoßende oder sich anziehende Magnete im jeweiligen Vorrichtungselement ausgebildet sind.

5. Verfahren zum Transport von Behältern, insbesondere von PET-Flaschen, mit linear oder rotatorisch antreibbaren Transportvorrichtungen, wobei die Transportvorrichtungen an ihrem äußeren Rand eine Vielzahl von Klammern umfassen, **dadurch gekennzeichnet, dass** mindestens eine Transportvorrichtung eine Vorrichtung gemäß einem der Ansprüche 1 bis 4 aufweist.

## Claims

1. Device (1) for gripping PET bottles (2) in bottle-filling systems, particularly for transferring from star to star/filler/rinser, comprising a transfer star (12), at which at least one gripper is positioned, wherein the at least one gripper comprises a mounting element (4) and two gripper arms (3a, 3b) positioned at the mounting element (4), and wherein the mounting element (4) comprising the gripper arms (3a, 3b) is rotatably supported about an axis (5) parallel to the central bottle axis, and is provided with a centering device which forces the gripper arms (3a, 3b) into the centered position after sideways deflection motions, **characterised in that** the centering device is formed by magnets (10, 13) at the mounting element (4) on the one side and at the transfer star (12) on the other.

2. Device according to claim 1 or 2, **characterised in that** the mounting element (4) comprises an assembly (9) provided with magnets (10) for stroking over resetting magnets positioned in the transfer star.

3. Device according to claim 2, **characterised in that** the magnets (10, 13) are cast into the assembly (9) of the mounting element and/or in the transfer star.

4. Device according to any one of the preceding claims, **characterised in that** the magnets are formed as repelling or attracting magnets in the respective device element.

5. Method for the transport of containers, in particular of PET bottles, with transport devices capable of being driven in linear or rotational fashion, wherein the transport devices comprise a plurality of clamps at their outer edge, **characterised in that** at least one transport device comprises a device according to any one of claims 1 to 4.

## Revendications

1. Dispositif (1) pour la préhension de bouteilles en PET (2) dans des installations d'embouteillage, en particulier pour le transfert d'un élément en étoile à un élément en étoile/de remplissage/de rinçage, comprenant un élément de transfert en étoile (12), sur lequel au moins une pince est positionnée, l'au moins une pince présentant un élément de retenue (4) et deux bras de préhension (3a, 3b) positionnés sur l'élément de retenue (4), l'élément de retenue (4) présentant les bras de préhension (3a, 3b) étant logé de manière rotative autour d'un axe (5) parallèle à l'axe de bouteille central et étant pourvu d'un dispositif de centrage qui ramène de force les bras de préhension (3a, 3b) après des mouvements de déviation latérale dans la position centrée, **caractérisé en ce que** le dispositif de centrage est formé par des aimants (10, 13) sur l'élément de retenue (4) d'une part et sur l'élément de transfert (12) en étoile d'autre part.

2. Dispositif selon la revendication 1 ou 2, **caractérisé en ce que** l'élément de retenue (4) présente une saillie (9) pourvue d'un aimant (10) pour le passage d'aimants de rappel positionnés dans l'élément de transfert en étoile.

3. Dispositif selon la revendication 2, **caractérisé en ce que** les aimants (10, 13) sont coulés dans la saillie (9) de l'élément de retenue et/ou dans l'élément de transfert en étoile.

4. Dispositif selon l'une quelconque des revendications précédentes, **caractérisé en ce que** les aimants sont réalisés comme des aimants se repoussant ou s'attirant dans l'élément de dispositif concerné.

5. Procédé de transport de récipients, en particulier de bouteilles en PET avec des dispositifs de transport entraînables linéairement ou en rotation, les dispositifs de transport comportant sur leur bord extérieur une pluralité d'attaches, **caractérisé en ce qu'**au moins un dispositif de transport présente un dispositif selon l'une quelconque des revendications 1 à 4.
